# EUROPEAN PATENT SPECIFICATION

(11) **EP 2 490 959 B1**
(45) Date of publication and mention of the grant of the patent: **08.06.2016**
(21) Application number: 10825568.8
(22) Date of filing: 20.10.2010
(51) Int. Cl.: B65D 51/18, A47J 47/16

(54) **METHOD AND APPARATUS FOR STORAGE AND USAGE DEVICE**
VERFAHREN UND VORRICHTUNG FÜR EINE SPEICHERUNGS- UND NUTZUNGSVORRICHTUNG
PROCÉDÉ ET APPAREIL POUR DISPOSITIF DE STOCKAGE ET D'UTILISATION

(30) Priority: 20.10.2009 US 279396 P
(43) Date of publication of application: 29.08.2012
(73) Proprietor: Gupta, Anupy Singla, Chicago, IL 60614 (US)
(72) Inventor: GUPTA, Sandeep, Chicago IL 60614 (US); GUPTA, Anupy Singla, Chicago, Illinois 60614 (US)
(74) Representative: Modiano, Micaela Nadia
(86) International application number: PCT/US2010/053309
(87) International publication number: WO 2011/050023

(56) References cited:
- WO-A1-02/064006
- WO-A2-2008/152362
- FR-A1- 2 900 041
- US-A1- 2008 083 639
- US-B1- 6 928 870

## Description

### Field of the Invention

The field of the invention relates to food storage and access and more particularly to food preparation ingredients storage and usage.

### Background of the Invention

This application claims the benefit of U.S. Provisional Patent Application Number 61/279,396 filed on October 20,2009, and incorporated herein by reference.

Devices for food storage, and more particularly ingredient storage, are well known in the art. Such devices typically include a variety of one or more storage reservoirs for holding dried food and/or spices that enable storage and use by a consumer.

For example, in Indian cooking, spices play a very important role. Historically, spices were commonly used in Indian cooking not only to season, but to preserve the food when refrigeration was not available. It is also believed by some that spices have medicinal uses and are commonly used for many home remedies. State of the art documents for this invention are : WO02/064006, WO 2008/152362, FR 2900 041, US 2008/083639, US 6 928870.

Spices and other ingredients, unfortunately, can degrade if they are exposed to air or light for long periods of time. Light tends to have a detrimental leaching affect, and overexposure allows the essential oils to escape from spices. As such, many Indian households use a special storage box to maintain their spices in a protective environment. A typical Indian spice box is commonly has a round box with multiple round compartments, along with a small teaspoon or other measuring device which fits in the box. The Indian cook will fill these compartments with his or her favorite and regularly used spices. One can fill the spices that are used frequently to create a personal spice box. Using a spice box is convenient as it makes cooking easier and spices are readily available making cooking faster.

One disadvantage of existing spice boxes is that during use, there is no convenient way to "level" off a spice measuring device. Commonly, two hands are required to level the spices from the measuring device. One hand holds the measuring device and the other holds an object to scrape off the excess spices. This method is not convenient and creates spillage and waste of the spices.

The present invention overcomes this and other inherent disadvantages of existing spice boxes. In one form of the invention, the user can use one hand to hold a measuring device filled with spices and level the spices by "scraping or leveling" the measuring device using an edge formed by a partial cover located on an individual spice container. These and other advantages are more fully described herein.

### Brief Description of the Drawings

Fig. 1 depicts a top view of the spice storage apparatus with seven individual spice storage containers in accordance with an illustrated embodiment of the invention;
Fig. 2 depicts a side view of the spice storage apparatus of Fig. 1 with the cover in place;
Fig. 3 depicts a side view of one spice storage container in accordance with an illustrated embodiment of the invention;
Fig. 4 depicts a top view of one embodiment of the spice storage apparatus showing multiple spice storage containers stored within the outer container and with the cover of the outer container removed.

### Detailed Description of an Illustrated Embodiment

While the present invention is susceptible of embodiments in various forms, there is shown in the drawings and will hereinafter be described some exemplary and non-limiting embodiments, with the understanding that the present disclosure is to be considered an exemplification for the invention and is not intended to limit the invention to the specific embodiments illustrated. In this disclosure, the use of the disjunctive is intended to include the conjunctive. The use of the definite article or indefinite article is not intended to indicate cardinality. In particular, a reference to "the" object or "a" object is intended to denote also one of a possible plurality of such objects.

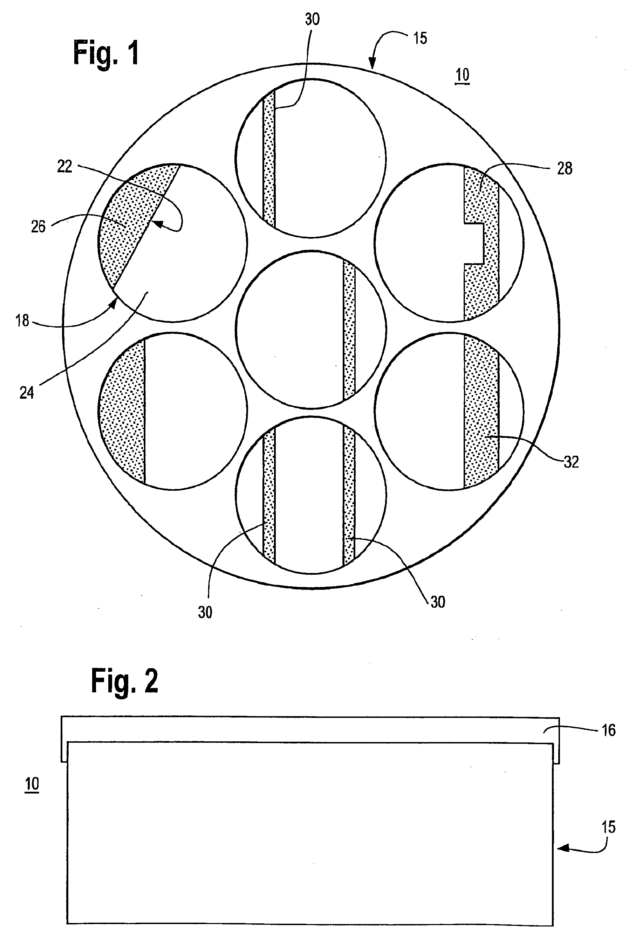

In one form, the invention is a spice storage apparatus. As shown in Figs. 1 and 2, in one embodiment, spice storage apparatus 10 may include an outer container 15 having a cover 16 that can be placed over the outer container 15. A plurality of inner storage containers 18 are positioned within outer container 15.

In one embodiment, inner storage containers 18 are used for holding a variety of different spices, dried foods, or ingredients. The inner storage containers 18 sit conveniently within outer container 15 substantially as shown in Fig. 1. In one form, there may be seven storage containers 18 positioned within container 15 substantially as shown in Fig. 1. In yet other embodiments, there may be more or less than seven storage containers 18 positioned within outer container 15 depending on the size, shape or application of both the inner storage containers 18 and outer container 15. For example, embodiments can have 9-12 inner storage containers for certain applications. For different applications, inner storage containers 18 and outer container 15 may be a variety of shapes, such as, for example, but not limited to, a square, triangular or circular cross-sectional area. Fig. 1 shows one embodiment where both the outer container 15 and inner storage containers 18 have a shape whereby their cross-sectional area is substantially circular in form. In one application, the spice box will be designed to easily fit into standard kitchen cabinets and drawers. With this in mind, the outer container 15 may be shaped square, rectangular, trapezoid or round. The individual containers 18 within each outer container 15 will be shaped to fit within the larger container accordingly. Also, the design of the containers may be such that they can comfortably fit on Lazy Susan shelves that are optional for kitchen cabinets.

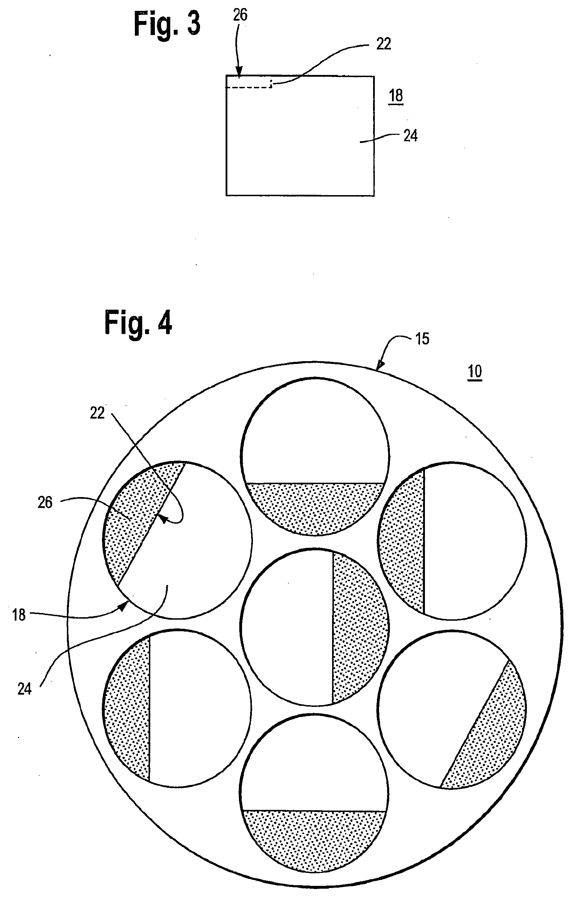

In one form as shown in Figs. 1 and 3, inner storage container 18 may comprise an interior storage section 24, a top surface area/cover 26 that extends across at least a portion of the top of inner storage container 18 and whereby the top surface area/cover 26 defines an edge or ridge portion 22. In one form, edge 22 is substantially flat in nature as shown in Fig. 1, Fig. 3 and Fig. 40.

During use, a spoon or other measuring device may be inserted into the interior portion 24 of storage container 18 to extract an amount of spice contained therein. As the user extracts the measuring device or spoon from the inner storage device 18 the user may "level off" the measuring device by scraping the excess amount of spice contained on the spoon. To accomplish this quickly, the spoon is pressed against and scraped along edge 22 as the spoon is extracted from inner storage container 18. Any excess spice will fall into the inner container 18 thereby minimizing a messy workspace and eliminating the need for another device to level off the spoon.

Further, the partial cover 26 is designed to not interfere with a user inserting a spoon or other measuring device into the spice container 18. These and other benefits are accomplished in part because it is not a purpose of the top surface area 26 to provide for complete closing or sealing of the individual spice containers 18 and as such its design does not interfere with the needs of the user for quick extraction and measuring spices from each container 18.

In one form of spice storage apparatus, the ease of use is apparent due to the creative design features. For example, it is noted that only one external cover 16 needs to be removed to provide access to all individual spice storage containers 18 each having a partial top cover portion on top surface area 26 defining an edge 22 that is easily available for quick use. This combination eliminates the need to remove a cover or top portion from each individual spice container before accessing the spices contained therein.

In one form of the invention, the top surface area 26 may serve a variety of different purposes. In one application, an identification of the goods contained within storage container 18 may be written or printed on top surface area 26 for easier identification of the goods contained within storage container 18. In yet another application, the information may be written in Braille for vision impaired users. In other forms, top surface area 26 may be color coded to identify ingredients within inner storage container 18 that work well in combination with each other. Press on labels, magnets or stickers may be supplied to attach to surface area 26 to facilitate with information communication In other embodiments, a variety of other markings may be used on top surface area 26 to assist the user when selecting a particular spice, seasoning or other ingredient use during food preparation and/or cooking.

Top surface area 26 and edge 22 may also provide for a convenient way for a user to lift storage container 18 up and out from container 15 if it is desired to move inner storage container 18 from container 15. In a similar situation, top surface area 26 will make it easier for a user to rearrange the location of inner storage containers 18 within container 15 if it is desired to do so. In still other forms of the invention, on or more inner containers 18 may also have a cover with holes so that they can be used as a shaker and allow the contents to be sprinkled.

In other embodiments, it is understood that a variety of modifications can be made to top surface 26 and edge 22, some examples of which are shown in Fig. 1 but are not limited thereto. For example, in one form, inner storage container 18 may contain either one horizontal section 30 or two horizontal sections 30 as shown in Fig. 1. In this embodiment, it is understood that horizontal section 30 serves similar uses as disclosed herein by the combination of top surface area 26 and edge area 22. As shown in Fig. 1, horizontal section 30 and horizontal section 32 may have a variety of different widths and locations across the top of inner storage container 18. For example, it is shown in Fig. 1 that horizontal section 32 is substantially wider than horizontal section 30 depending on the requirements of the application.

In other forms, a top surface area 28 with an indented portion is also shown in Fig. 1 as yet an additional way to configure its use. It is understood that these are merely a few examples as disclosed herein and other configurations are possible with essentially the same beneficial results as disclosed and incorporated herein and it is understood by one skilled in the art that the existing surface area and edge may be modified to form a variety of different shapes.

Fig. 2 shows a side-view of a spice storage device 10 whereby one form of cover 16 is in place on top of outer container 15 thereby protecting the contents contained within inner storage containers 18. It is understood that cover 16 can be a variety of different shapes and made out a variety of different materials to provide benefit for the spice storage device 10. In one form, cover 16 fits to snuggly secure and seal storage container 18 to prevent the container spices from spilling or mixing together. In yet other embodiments, each individual container 18 may have its own cover to prevent cross contamination of its content. Alternatively, the larger container 15 may have an internal cover that seals the group of containers 18 to prevent mixing of the individual spices. The larger container 15 will also have an outer cover that closes the entire system and contents for easy transport.

In one form of the invention as shown in Fig. 4, spice storage containers 18 may be contained within outer container 15. In this form, spice storage containers 18 may all be of the same design and incorporate a top surface area/cover 26 as substantially shown in Fig. 4. It is further noted that in this embodiment, cover 26 defines an edge 22 that extends from one side of spice container 18 to the opposite side of spice container 18 which can be used to assist with the leveling of a measuring device, such as, for example, a spoon. It is understood that in this embodiment, as well as in the other embodiments, spice storage containers 18 can include any variety of different spices, and may be positioned within the outer container 15 in any desired combination as the user may require. Once the cover is placed over the outer container 15, the inner storage containers 18 will be properly sealed to prevent dirt, moisture, or other foreign particles from entering into the spice containers 18.

In yet other embodiments, a variety of modifications may be made to the spice storage device 10 whereby the outer container 15 and inner storage containers 18 may be constructed so that they can be a variety of different shapes and sizes and constructed of a variety of other materials. For example, materials to create the outer container 15 and inner containers 18 may be comprised of metal, glass, plastic, thick cardboard, stainless steel, fiberglass, paper, and a variety of other materials in combination thereof as well as composites to provide for similar results as identified herein. It is understood that particular shapes and sizes and materials made to construct the spice storage container device 10 will depend on its particular application. Also, in one form of the invention it is understood that it can be used to store other ingredients besides spices. For example, the storage apparatus can store spices, herbs, condiments, ingredients for various ethnic food specialties, baking ingredients, etc.

Specific embodiments of novel methods and apparatus for construction of spice storage devices according to the present invention have been described for the purpose of illustrating the manner in which the invention is made and used.

## Claims

1. A storage apparatus for holding and providing access for a variety of different cooking ingredients such as spices or condiments comprising:
an outer container (15);
a cover (16) that fits over the outer container;
a plurality of storage containers (18) that are positioned within the outer container (15) whereby each container (18) has a top opening wherein an identification of the goods contained within the storage containers (18) is written in braille on a top surface (26) for vision impaired users; and
at least one of the storage containers (18) having a partial cover (26) that extends across and covers only part of the top opening of the container (18) and defines at least one edge (22) that extends across the storage container top opening, wherein the cover (16) needs to be removed to provide access to all individual storage containers (18) thereby eliminating the need to remove a cover or top portion from each individual container (18), where the cover (16) fits to snuggly secure and seal storage containers (18) to prevent container contents from spilling or mixing together and where once the cover (16) is placed over the outer container (15), the inner storage containers (18) are properly sealed to prevent dirt, moisture and other foreign particles from entering into the containers (18)

2. The storage apparatus of claim 1 wherein the outer container (15) is square-shaped and the storage containers (18) are square-shaped.

3. The storage apparatus of claim 1 wherein the at least one defined edge (22) forms substantially a straight line.

4. The storage apparatus of claim 1 wherein the partial cover (26) is permanently mounted to the storage container (18).

5. The storage apparatus of claim 1 wherein the outer container (15) and the storage containers (18) are comprised of stainless steel.

6. The storage apparatus of claim 1 wherein there are at least seven storage containers (18) located within the outer container (15).

7. The storage apparatus of claim 1 wherein the means for covering is permanently mounted to the container.

8. The storage apparatus of claim 1 wherein the outer container (15) is circular-shaped and the storage containers (18) are circular-shaped.

9. The storage apparatus of claim 1 further including a defined edge (22) that extends from one portion of the storage container (18) to another storage container (18) and positioned over the storage container opening.

10. The storage apparatus of claim 1 or 9 wherein the defined edge (22) has at least one indented portion along the edge (22) wide enough to receive a spoon or other measuring device.

11. A method of storing and accessing cooking ingredients comprising:
providing an outer container (15);
introducing a cover (16) that fits over the outer container (15);
inserting a plurality of ingredient containers (18) positioned within the outer container (15) whereby each ingredient storage container (18) has a top opening;
writing an identification of the goods contained within the plurality of ingredient containers (18) on a top surface (26);
providing at least one of the ingredient storage containers (18) with a cover (26) that extends across and covers only part of the top opening of the ingredient container and
defines an edge (22) that extends across the ingredient container opening;
removing the cover of the outer container (15) to provide access to all individual storage containers (18) thereby eliminating the need to remove a cover or top portion from each individual container (18), where the cover (16) fits to snuggly secure and seal storage containers (18) to prevent container contents from spilling or mixing together and where once the cover (16) is placed over the outer container (15), the inner storage containers (18) are properly sealed to prevent dirt, moisture and other foreign particles from entering into the containers (18);
inserting a means for measuring spices into one of the ingredient storage containers (18); and
removing the means for measuring and leveling the amount of ingredient by sliding the means for measuring along the defined edge (22).

12. The method as in claim 11 wherein the means for measuring is a spoon.

## Patentansprüche

1. Eine Lagervorrichtung zum Halten und Ermöglichen eines Zugriffs auf eine Vielzahl verschiedener Kochzutaten, wie zum Beispiel Gewürze oder Aromata, Folgendes umfassend:
einen äußeren Behälter (15);
einen Deckel (16), der über den äußeren Behälter passt;
eine Vielzahl von Lagerbehältern (18), die in dem äußeren Behälter (15) positioniert sind, wodurch jeder Behälter (18) eine obere Öffnung hat, wobei eine Bezeichnung der Waren, die in den Lagerbehältern (18) enthalten sind, für sehbehinderte Benutzer in Braille auf eine obere Oberfläche (26) geschrieben ist; und
wobei mindestens einer der Lagerbehälter (18) eine Teilabdeckung (26) hat, die sich nur über einen Teil der oberen Öffnung des Behälters (18) erstreckt und ihn bedeckt und mindestens eine Kante (22) bestimmt, welche sich über die obere Lagerbehälteröffnung erstreckt, wobei der Deckel (16) entfernt werden muss, um Zugriff auf alle einzelnen Lagerbehälter (18) zu ermöglichen, wodurch die Notwendigkeit beseitigt wird, einen Deckel oder oberen Abschnitt von jedem einzelnen Behälter (18) zu entfernen, wobei der Deckel (16) passt, um Lagerbehälter (18) gut zu sichern und abzudichten, um zu verhindern, dass Behälterinhalt ausgeschüttet oder vermischt wird, und wobei, sobald der Deckel (16) über den äußeren Behälter (15) platziert ist, die inneren Lagerbehälter (18) gut abgedichtet sind, um zu verhindern, dass Schmutz, Feuchtigkeit und andere Fremdkörper in die Behälter (18) eindringen.

2. Die Lagervorrichtung gemäß Anspruch 1, wobei der äußere Behälter (15) quadratisch ist und die Lagerbehälter (18) quadratisch sind.

3. Die Lagervorrichtung gemäß Anspruch 1, wobei die mindestens eine definierte Kante (22) im Wesentlichen eine gerade Linie bildet.

4. Die Lagervorrichtung gemäß Anspruch 1, wobei die Teilabdeckung (26) dauerhaft auf den Lagerbehälter (18) montiert ist.

5. Die Lagervorrichtung gemäß Anspruch 1, wobei der äußere Behälter (15) und die Lagerbehälter (18) aus rostfreiem Stahl bestehen.

6. Die Lagervorrichtung gemäß Anspruch 1, wobei sich mindestens sieben Lagerbehälter (18) im äußeren Behälter (15) befinden.

7. Die Lagervorrichtung gemäß Anspruch 1, wobei das Mittel zur Abdeckung dauerhaft am Behälter montiert ist.

8. Die Lagervorrichtung gemäß Anspruch 1, wobei der äußere Behälter (15) kreisförmig ist und die Lagerbehälter (18) kreisförmig sind.

9. Die Lagervorrichtung gemäß Anspruch 1, die weiter eine definierte Kante (22) einschließt, welche sich von einem Teil des Lagerbehälters (18) zu einem anderen Lagerbehälter (18) erstreckt und über die Lagerbehälteröffnung positioniert ist.

10. Die Lagervorrichtung gemäß Anspruch 1 oder 9, wobei die definierte Kante (22) mindestens einen eingekerbten Abschnitt entlang der Kante (22) hat, der breit genug ist, um einen Löffel oder eine andere Messvorrichtung aufzunehmen.

11. Ein Verfahren zum Lagern und Zugreifen auf Kochzutaten, das Folgendes umfasst:
Bereitstellung eines äußeren Behälters (15);
Einführen eines Deckels (16), der über den äußeren Behälter (15) passt;
Einsetzen einer Vielzahl von Zutatenbehältern (18), positioniert in den äußeren Behälter (15), wodurch jeder Zutaten-Lagerbehälter (18) eine obere Öffnung hat;
Schreiben einer Kennzeichnung der Waren, die in der Vielzahl von Zutatenbehältern (18) enthalten sind, auf eine obere Oberfläche (26);
Ausstatten mindestens eines der Zutaten-Lagerbehälter (18) mit einer Abdeckung (26), die sich nur über einen Teil der oberen Öffnung des Zutatenbehälters erstreckt und ihn bedeckt und eine Kante (22) bestimmt, die sich über die Zutatenbehälteröffnung erstreckt;
Abnehmen des Deckels des äußeren Behälters (15), um Zugriff auf alle einzelnen Lagerbehälter (18) zu bieten und so die Notwendigkeit zu beseitigen, von jedem einzelnen Behälter (18) einen Deckel oder oberen Abschnitt abzunehmen, wobei der Deckel (16) passt, um Lagerbehälter (18) gut zu sichern und abzudichten, um zu verhindern, dass Behälterinhalte ausgeschüttet oder vermischt werden, und wobei, sobald der Deckel (16) über den äußeren Behälter (15) platziert wird, die inneren Lagerbehälter (18) gut abgedichtet sind, um zu verhindern, dass Schmutz, Feuchtigkeit und andere Fremdkörper in die Behälter (18) eindringen;
Einführen eines Mittels zum Messen von Gewürzen in einen der Zutaten-Lagerbehälter (18); und
Entnahme des Mittels zum Messen und Nivellieren der Menge der Zutat durch Schieben des Mittels zum Messen entlang der definierten Kante (22).

12. Das Verfahren gemäß Anspruch 11, wobei das Mittel zum Messen ein Löffel ist.

## Revendications

1. Appareil de stockage pour contenir et fournir un accès à une variété de différents ingrédients de cuisine tels que des épices ou condiments comprenant:
un récipient externe (15);
un couvercle (16) qui s'adapte sur le récipient externe;
une pluralité de récipients de stockage (18) qui sont positionnés à l'intérieur du récipient externe (15) de sorte que chaque récipient (18) présente une ouverture supérieure dans laquelle une identification des aliments contenus à l'intérieur des récipients de stockage (18) est écrite en braille sur une surface supérieure (26) pour des utilisateurs malvoyants; et
au moins l'un des récipients de stockage (18) présentant un couvercle partiel (26) qui s'étend à travers et couvre seulement une partie de l'ouverture supérieure du récipient (18) et définit au moins un bord (22) qui s'étend à travers l'ouverture supérieure du récipient de stockage, dans lequel le couvercle (16) doit être enlevé pour fournir l'accès à tous les récipients de stockage individuels (18) éliminant ainsi la nécessité d'enlever un couvercle ou une portion supérieure de chaque récipient individuel (18), où le couvercle (16) s'ajuste pour bien fermer et rendre étanche les récipients de stockage (18) pour empêcher au contenu des récipients de se renverser ou se mélanger et où, une fois le couvercle (16) placé sur le récipient externe (15), les récipients de stockage internes (18) sont correctement fermés pour empêcher la poussière, l'humidité ou toutes autres particules étrangères d'entrer dans les récipients (18).

2. Appareil de stockage selon la revendication 1 dans lequel le récipient externe (15) est de forme carrée et les récipients de stockage (18) sont de forme carrée.

3. Appareil de stockage selon la revendication 1 dans lequel le au moins un bord défini (22) forme sensiblement une ligne droite.

4. Appareil de stockage selon la revendication 1 dans lequel le couvercle partiel (26) est fixé de façon permanente au récipient de stockage (18).

5. Appareil de stockage selon la revendication 1 dans lequel le récipient externe (15) et les récipients de stockage (18) sont en acier inoxydable.

6. Appareil de stockage selon la revendication 1 dans lequel sont présents au moins sept récipients de stockage (18) situés à l'intérieur du récipient externe (15).

7. Appareil de stockage selon la revendication 1 dans lequel les moyens de couverture sont fixés de façon permanente au récipient.

8. Appareil de stockage selon la revendication 1 dans lequel le récipient externe (15) est de forme circulaire et les récipients de stockage (18) sont de forme circulaire.

9. Appareil de stockage selon la revendication 1 comprenant en outre un bord défini (22) qui s'étend depuis une partie du récipient de stockage (18) à un autre récipient de stockage (18) et positionné sur l'ouverture du récipient de stockage.

10. Appareil de stockage selon la revendication 1 ou 9 dans lequel le bord défini (22) présente au moins une partie entailée le long du bord (22) suffisamment large pour recevoir une cuillère ou un autre dispositif de mesure.

11. Procédé de stockage et d'accès à des ingrédients de cuisine comprenant:
la fourniture d'un récipient externe (15);
l'introduction d'un couvercle (16) qui s'adapte sur le couvercle externe (15);
l'insertion d'une pluralité de récipients (18) d'ingrédient positionnés à l'intérieur d'un récipient externe (15) par lequel chaque récipient de stockage d'ingrédient (18) présente une ouverture supérieure ;
l'inscription d'une identification des aliments contenus à l'intérieur d'une pluralité de récipients d'ingrédient (18) sur une surface supérieure (26) ;
la fourniture d'au moins l'un des récipients de stockage d'ingrédient (18) avec un couvercle (26) qui s'étend à travers et couvre seulement une partie de l'ouverture supérieure du récipient d'ingrédient et
définit un bord (22) qui s'étend à travers l'ouverture du récipient d'ingrédient;
l'enlèvement du couvercle du récipient externe (15) pour fournir l'accès à tous les récipients individuels de stockage (18) éliminant ainsi la nécessité d'enlever un couvercle ou une portion supérieure de chaque récipient individuel (18), où le couvercle (16) s'ajuste pour bien fermer et rendre étanche les récipients de stockage (18) pour empêcher au contenu des récipients de se renverser ou se mélanger et où, une fois le couvercle (16) placé sur le récipient externe (15), les récipients de stockage internes (18) sont correctement fermés pour empêcher la saleté, l'humidité ou toutes autres particules étrangères d'entrer dans les récipients (18) ;
l'insertion d'un moyen pour mesurer les épices dans l'un des récipients de stockage d'ingrédient (18); et
l'enlèvement des moyens de mesure et le nivellement de la quantité d'ingrédient en faisant coulisser les moyens de mesure le long du bord défini (22).

12. Procédé comme dans la revendication 11, dans lequel le moyen de mesure est une cuillère.
